# EUROPÄISCHE PATENTSCHRIFT

(11) **EP 1 655 201 B1**
(45) Veröffentlichungstag und Bekanntmachung des Hinweises auf die Patenterteilung: **30.07.2008**
(21) Anmeldenummer: 05021993.0
(22) Anmeldetag: 08.10.2005
(51) Int. Cl.: B62D 1/187, B62D 1/181

(54) **Lenksäulenanordnung für ein Kraftfahrzeug, insbesondere ein Kettenfahrzeug**
Steering-Column Assembly
Système de colonne de direction

(30) Priorität: 03.11.2004 DE 202004017086 U
(43) Veröffentlichungstag der Anmeldung: 10.05.2006
(73) Patentinhaber: Kässbohrer Geländefahrzeug AG, 88471 Laupheim (DE)
(72) Erfinder: Kanzler, Helmut, 89269 Vöhringen-Illerberg (DE); Mack, Franz, 88457 Kirchdorf/Ille (DE); Weidenkopf, Andreas, 89231 Neu-Ulm (DE)
(74) Vertreter: Patentanwälte Ruff, Wilhelm, Beier, Dauster & Partner

(56) Entgegenhaltungen:
- EP-A- 0 125 211
- DE-A1- 2 101 018
- US-A- 4 195 535
- US-A1- 2003 122 359
- US-A1- 2004 140 145
- PATENT ABSTRACTS OF JAPAN Bd. 010, Nr. 249 (M-511), 27. August 1986 (1986-08-27) & JP 61 077565 A (AISIN SEIKI CO LTD), 21. April 1986 (1986-04-21)
- PATENT ABSTRACTS OF JAPAN Bd. 013, Nr. 335 (M-856), 27. Juli 1989 (1989-07-27) & JP 01 114570 A (MAZDA MOTOR CORP), 8. Mai 1989 (1989-05-08)

## Beschreibung

Die Erfindung betrifft eine Lenksäulenanordnung für ein Kraftfahrzeug, insbesondere ein Kettenfahrzeug, mit einem Lenkrad, dem Mittel zur elektrischen oder elektronischen Übertragung von Lenkbewegungen des Lenkrades auf eine Fahrzeugsteuerung zugeordnet sind, und wobei das Lenkrad an einem oberen Lenksäulenteil drehbeweglich angeordnet ist, der relativ zu einem fahrzeugfest angeordneten, unteren Lenksäulenteil verstellbar gehalten ist.

Ein Kettenfahrzeug, das insbesondere zur Präparierung und Gestaltung von Schneepisten eingesetzt wird, weist ein Fahrerhaus auf, in dem ein Fahrersitz untergebracht ist. Dem Fahrersitz ist in grundsätzlich bekannter Weise ein Lenkrad zugeordnet, das in einer Lenksäule drehbar gelagert ist. Wesentliches Merkmal bei Lenkvorrichtungen für derartige Kettenfahrzeuge ist es, dass das Lenkrad durch elektrische oder elektronische Übertragungsmittel an eine entsprechende Fahrzeugsteuerung gekoppelt ist, so dass im Gegensatz zu Radkraftfahrzeugen keine mechanische Übertragung von Lenkbewegungen des Lenkrades auf eine entsprechende Fahrzeugsteuerung erfolgt. Bei Kettenfahrzeugen führt zudem eine Lenkradbewegung dazu, dass Hydromotoren der gegenüberliegenden Kettenfahrwerksseiten mittels einer Fahrzeughydraulik entsprechend individuell angesteuert werden und so die gewünschte Fahrzeugbewegung erzielen. Bei Geradeausfahrt werden beide Ketten gleichmäßig angesteuert. Bei einer Kurvenfahrt wird eine der beiden Ketten mit gegenüber der anderen Kette veränderter Geschwindigkeit bewegt. Bei starkem Einlenken ist es schließlich möglich, einen Kettengegenlauf zu erzeugen und so eine Rotation des Kettenfahrzeugs um eine Fahrzeughochachse zu ermöglichen. Lenkräder derartiger Kettenfahrzeuge sind relativ zu einer entsprechenden Fahrersitzposition nicht verstellbar.

Bei Radkraftfahrzeugen, insbesondere bei Personenkraftwagen, ist es zudem bekannt, Lenksäulen höhenverstellbar und längsverstellbar anzuordnen, um eine individuelle Anpassung an unterschiedliche Sitzpositionen eines Fahrers zu ermöglichen. Eine solche Anordnung ist aus der US 4 195 535 bekannt.

Aufgabe der Erfindung ist es, eine Lenksäulenanordnung der eingangs genannten Art zu schaffen, die eine ergonomische Anpassung des Lenkrades an unterschiedliche Sitzpositionen eines Fahrers des Kraftfahrzeugs ermöglicht.

Diese Aufgabe wird dadurch gelöst, dass Mittel zur Höhenverstellung und Mittel zur Längsverstellung zwischen dem unteren Lenksäulenteil und dem oberen Lenksäulenteil vorgesehen sind, um den oberen Lenksäulenteil in seiner Höhe und in seiner Länge relativ zu einer Fahrersitzposition zu verstellen. Dadurch ist eine individuelle und ergonomisch günstige Anpassung der Lenkradstellung an unterschiedliche Sitzpositionen eines jeweiligen Fahrers des Kraftfahrzeuges ermöglicht. Die erfindungsgemäße Lösung eignet sich besonders vorteilhaft für eine Lenkvorrichtung eines Kettenfahrzeugs, insbesondere eines Schneepistenfahrzeugs zur Präparierung und Gestaltung von Schneegelände. Die Mittel zur Längsverstellung dienen dazu, einen Abstand zwischen Lenkrad und dem Fahrer des Kettenfahrzeugs in seiner entsprechenden Sitzposition auf einem Fahrersitz längs der Drehachse des Lenkrades und vorzugsweise im wesentlichen in Fahrzeuglängsrichtung zu verändern. Die Mittel zur Höhenverstellung sollen im wesentlichen eine Verlagerung der Lenkradposition radial zur Drehachse des Lenkrades und im Wesentlichen in Fahrzeughochrichtung bewirken. Es ist möglich, das Lenkrad alternativ entweder in seiner Höhe oder in seiner Längsposition zu verstellen, oder aber gleichzeitig eine Längs- und eine Höhenverstellung zu bewirken.

In Ausgestaltung der Erfindung umfassen die Mittel zur Höhenverstellung und die Mittel zur Längsverstellung eine Schwenkhebelkinematik, mittels der der obere Säulenteil an dem unteren Säulenteil angelenkt ist. Mittels der Schwenkhebelkinematik ist sowohl eine Höhenverstellung als auch eine Längsverstellung ermöglicht.

In weiterer Ausgestaltung der Erfindung sind der Schwenkhebelkinematik Antriebsmittel zugeordnet, die zur Betätigung der Schwenkhebelkinematik vorgesehen sind. Vorzugsweise sind die Antriebsmittel hydraulisch oder pneumatisch ausgeführt. In gleicher Weise können diese aber auch elektrisch oder mechanisch gestaltet sein. Vorzugsweise ist als Antriebsmittel wenigstens ein hydraulisch oder pneumatisch beaufschlagter Stellzylinder vorgesehen.

In weiterer Ausgestaltung der Erfindung sind für die Antriebsmittel von einer Bedienperson bedienbare Betätigungsmittel vorgesehen. Durch die Betätigungsmittel werden die Antriebsmittel angesteuert, um eine entsprechende Höhen- und/oder Längsverstellung zu bewirken.

In weiterer Ausgestaltung der Erfindung ist den Mitteln zur Höhenverstellung und den Mitteln zur Längsverstellung jeweils eine separate Antriebseinheit zugeordnet, die durch jeweils ein separates Betätigungsmittel individuell ansteuerbar sind. Dadurch ist es möglich, wahlweise entweder eine Höhenverstellung oder eine Längsverstellung oder eine kombinierte Höhen- und Längsverstellung zu bewirken.

In weiterer Ausgestaltung der Erfindung weist die Schwenkhebelkinematik eine Parallelogrammlenkereinheit auf. Die Parallelogrammlenkereinheit dient dazu, den oberen Lenksäulenteil relativ zu dem unteren Lenksäulenteil zumindest weitgehend parallel zu verlagern. Dadurch ist insbesondere eine Längsverstellung des Lenkrades ermöglicht.

In weiterer Ausgestaltung der Erfindung weist die Schwenkhebelkinematik einen Stützarm auf, der an dem oberen Säulenteil einerseits und an dem unteren Säulenteil andererseits schwenkbeweglich angelenkt ist. Der Stützarm ist vorzugsweise stirnseitig an dem oberen Lenksäulenteil angeordnet und ist stabil ausgeführt.

In weiterer Ausgestaltung der Erfindung ist das Betätigungsmittel als Fußhebel gestaltet. Vorzugsweise sind beide Betätigungsmittel jeweils als voneinander unabhängig betätigbare Fußhebel ausgeführt. Durch die Betätigungsmittel wird vorzugsweise eine Arretierung der Mittel zur Höhenverstellung und/oder der Mittel zur Längsverstellung gelöst, so dass entweder anschließend durch manuelles Ergreifen und Bewegen des Lenkrades die gewünschte Verlagerungsbewegung des Lenkrades vorgenommen werden kann, oder dass durch das Lösen der Arretierung die Antriebsmittel zwangsläufig die Schwenkhebelkinematik betätigen, bis das Lenkrad die gewünschte Position erreicht hat. Anschließend wird durch Loslassen der Betätigungsmittel eine zwangsläufige Rückstellung der Betätigungsmittel in die Arretier- oder Blockierposition bewirkt. Die Antriebsmittel können die manuelle Verlagerungsbewegung des Lenkrades auch unterstützen, indem sie unterstützende Schwenkhebelkräfte aufbringen, ohne dass die notwendigen Hebelkräfte zur Verlagerung des Lenkrades vollständig durch die Antriebsmittel aufgebracht werden.

In einer vorteilhaften Ausgestaltung sind der Schwenkhebelkinematik Blockiermittel zugeordnet, um den oberen Lenksäulenteil gegenüber dem unteren Lenksäulenteil in einer Funktionsstellung zu arretieren. Dadurch ist eine zuverlässige Fixierung des oberen Lenksäulenteiles in der jeweils individuell eingestellten Position ermöglicht.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einer Seitenansicht eine Ausführungsform einer Lenksäule für ein Kettenfahrzeug mit einer erfindungsgemäßen Lagervorrichtung für ein Lenkrad der Lenksäule und
- Fig. 2: in perspektivischer Darstellung die Lenksäule nach Fig. 1.

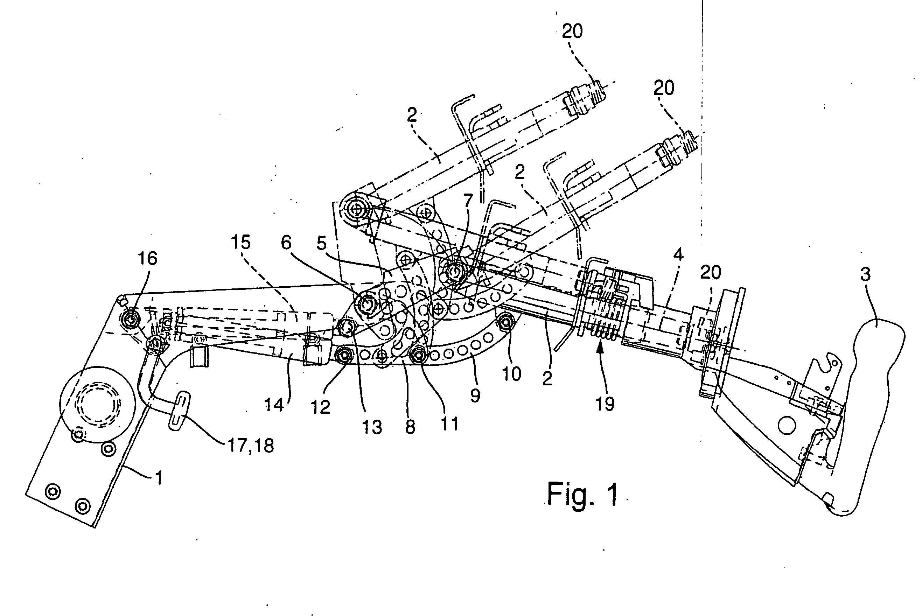

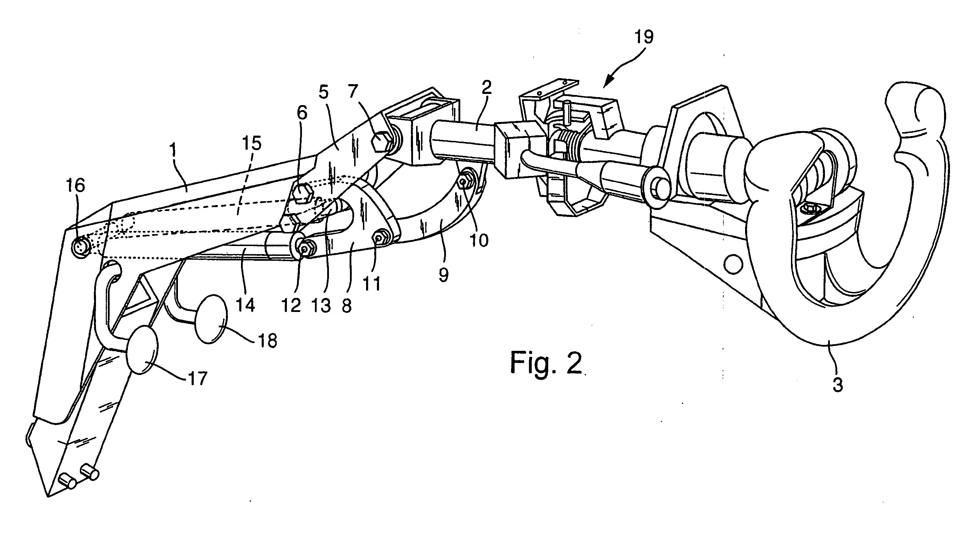

Eine Lenksäulenanordnung gemäß den Fig. 1 und 2 ist in einem Fahrerhaus eines Kettenfahrzeugs für die Präparierung und Gestaltung von Schneegelände vorgesehen. Die Lenksäulenanordnung ist in grundsätzlich bekannter Weise - in vorwärts gerichteter Fahrtrichtung des Kettenfahrzeugs gesehen - vor einem Fahrersitz positioniert. Die Lenksäulenanordnung weist ein drehbewegliches Lenkrad 3 auf, das an einem oberen Lenksäulenteil 2 um eine Lenkachse 4 drehbeweglich gelagert ist. Das Lenkrad 3 steht über eine pauschal mit 19 bezeichnete Drehwinkelerfassungs- und -übertragungseinheit elektrisch oder elektronisch mit einer Fahrzeugsteuerung in Verbindung. Mittels der Lenkwinkelerfassungs- und -übertragungseinheit 19 werden über entsprechende Signal- und Steuerleitungen auf elektrischem oder elektronischem Wege Lenkbewegungen des Lenkrades 3 erfasst und in einer elektronischen Steuereinheit der Fahrzeugsteuerung zu entsprechenden Ansteuerbefehlen für eine Fahrzeughydraulik und insbesondere für eine Ansteuerung von Hydromotoren eines rechten und eines linken Kettenlaufwerkes eingesetzt.

Der obere Lenksäulenteil 2 ist mittels einer Schwenkhebelkinematik 5 bis 13 an einem unteren Lenksäulenteil 1 verstellbar gehalten. Der untere Lenksäulenteil 1 ist fahrzeugfest montiert, indem er vorzugsweise an einem Fahrzeugboden oder einem anderen, tragenden Teil des Fahrerhauses befestigt ist. Der untere Lenksäulenteil 1 weist ein im Querschnitt U-förmiges, formsteifes Tragprofil, insbesondere ein Metallprofil, auf, das im montierten Zustand des unteren Lenksäulenteiles ― auf eine Fahrzeuglängsachse bezogen ― nach hinten offen ist. Der obere Lenksäulenteil 2 ist an dem unteren Lenksäulenteil 1 zum einen über einen Stützhebel 5 angelenkt, der an einem von dem Lenkrad 3 abliegenden Stirnendbereich um eine in Fahrzeugquerrichtung verlaufende Schwenkachse schwenkbeweglich gelagert ist. Die Lenksäulenanordnung insgesamt ist in einer vertikalen Fahrzeugebene sowohl in Fahrzeuglängsrichtung nach hinten als auch in Fahrzeughochrichtung nach oben ausgerichtet.

Der Stützhebel 5 wird durch ein Schenkelprofil gebildet, das das Metall-profil des unteren Lenksäulenteiles 1 beidseitig außen übergreift und mittels einer Lagerachse 6 in Abstand zu dem Anlenkpunkt 7 des oberen Lenksäulenteiles 2 auch am unteren Lenksäulenteil 1 schwenkbeweglich angeordnet ist. Die Lagerachse 6 ist parallel zu der Schwenkachse des Anlenkpunktes 7 ausgerichtet. Die Lagerachse 6 bildet somit einen zweiten Anlenkpunkt für den Stützhebel 5. Mittels eines Gabellenkers 8 und einer Parallelschwinge 9 wird gemeinsam mit dem Stützhebel 5 eine Parallelogrammlenkereinheit für den oberen Lenksäulenteil 2 geschaffen. Die Parallelschwinge 9 ist bogenartig gekrümmt und ist mittels eines oberen Lagerpunktes 10 an dem oberen Lenksäulenteil 2 und mittels eines unteren Lagerpunktes 11 mit dem Gabellenker 8 verbunden. Die Anlenkpunkte 6 und 11 sowie 7 und 10 spannen in etwa ein Parallelogramm auf. Der eine Gabelschenkel des Gabellenkers 8 erstreckt sich zwischen dem Anlenkpunkt 6 des unteren Lenksäulenteiles 1 und dem Anlenkpunkt 11, an dem der Gabellenker 8 mit der Parallelschwinge 9 verbunden ist. Im Bereich aller Anlenkpunkte 6, 7, 10, 11 sind die jeweiligen Teile der Schwenkhebelkinematik schwenkbeweglich zueinander gelagert.

Die Stützung des oberen Lenksäulenteiles 2 und damit der Schwenkhebelkinematik in einer jeweils eingestellten Funktionsposition wird durch zwei Stellzylinder 14, 15 in Form von Hydraulikzylindern vorgenommen, deren Zylinderteile sich an einem fest mit dem unteren Lenksäulenteil 1 verbundenen Lagerbolzen 16 schwenkbeweglich abstützen. Eine Schwenkachse des Lagerbolzens 16 ist parallel zu den Schwenkachsen der verschiedenen Anlenkpunkte 6, 7, 10, 11 ausgerichtet. Ein Kolbenteil des Stellzylinders 14 greift mit seinem Stirnende an einem freien Gabelfortsatz des Gabellenkers 8 an und ist mittels eines Gelenkpunktes 12 schwenkbeweglich mit diesem verbunden. Ein Kolbenteil des Stellzylinders 15 greift im Bereich eines Hebelfortsatzes des Stützhebels 5 auf der relativ zu dem Anlenkpunkt 6 dem Anlenkpunkt 7 gegenüberliegenden Seite an einem Gelenkpunkt 13 schwenkbeweglich an. Die Stellzylinder 14, 15 sind in ihrer jeweiligen Ruhestellung druckbelastet, so dass sie jede einnehmbare Stellung der Schwenkhebelkinematik stützen und demzufolge arretieren können. Eine Bewegung der Kolbenteile der Stellzylinder 14, 15 führt zu Schwenkbewegungen des Stützhebels 5, des Gabellenkers 8 und der Parallelschwinge 9, wodurch zwangsläufig Positionsveränderungen des oberen Lenksäulenteiles 2 gemäß den beispielhaft ausgewählten, strichpunktierten Darstellungen in Fig. 1 erzielt werden.

Die Stellzylinder 14, 15 sind in der jeweils eingestellten Funktions- oder Ruhestellung der Lenksäulenanordnung arretiert, so dass keine Relativbewegungen der Kolbenteile relativ zu den zugeordneten Zylinderteilen möglich sind. Hierdurch wird eine sichere Stützung und Blockierung der Schwenkhebelkinematik in der jeweils eingestellten Position erzielt. Um eine Verlagerung des oberen Lenksäulenteiles 2 zu ermöglichen, kann die Arretierung jedes Stellzylinders 14, 15 gelöst werden. Als Betätigungsmittel sind hierzu zwei Fußhebel 17, 18 vorgesehen, die in montierter Position der Lenksäulenanordnung in einem Fußraum vor dem Fahrersitz angeordnet sind. Jeweils ein Fußhebel 17, 18 ist jeweils einem der beiden Stellzylinder 14, 15 zugeordnet, so dass eine Betätigung des jeweiligen Fußhebels 17, 18 ein Lösen der Arretierung des jeweiligen Stellzylinders 14, 15 bewirkt. Gleichzeitig wird eine entsprechende Druckbeaufschlagung des jeweiligen Stellzylinders 14, 15 wirksam, so dass ein entsprechend hydraulischer Druck den jeweiligen Kolbenteil bewegen und demzufolge eine Verlagerung des oberen Lenksäulenteiles 2 ermöglichen kann. Vorzugsweise dienen die hydraulischen Stellzylinder 14, 15 lediglich dazu, eine Verlagerungsbewegung des oberen Lenksäulenteiles 2 zu unterstützen, so dass eine Bedienperson das Lenkrad 3 und den oberen Lenksäulenteil 2 mit relativ wenig Kraftaufwand quasi schwebend bewegen kann. Die Verlagerungsbewegung des oberen Lenksäulenteiles 2 und des Lenkrades 3 wird bei gedrücktem Fußhebel bzw. bei gedrückten Fußhebeln 17, 18 vorgenommen. Sobald das Lenkrad 3 und der obere Lenksäulenteil 2 die gewünschte Position erreicht haben, werden die Fußhebel losgelassen, wodurch sie sich mittels entsprechender Rückstellkräfte in ihre Ausgangsstellung zurückstellen, in der die Stellzylinder 14, 15 und insbesondere deren Kolbenteile arretiert sind. Dadurch wird die Schwenkhebelkinematik in der eingestellten Verlagerungsposition des oberen Lenksäulenteiles 2 blockiert.

Das Lenkrad 3 ist mittels eines nicht näher bezeichneten Halteabschnittes auf einem Stirnendbereich 20 des oberen Lenksäulenteiles 2 befestigt. Der Stirnendbereich 20 ist vorzugsweise um die Lenkachse 4 drehbeweglich relativ zu dem oberen Lenksäulenteil 2 gelagert.

Sowohl die Parallelschwinge 9 als auch der Gabellenker 8 sind als Lochprofile ausgeführt. Die Anlenkpunkte 6, 7, 10, 11 und die Gelenkpunkte 12, 13 werden durch lösbare Schraubverbindungen übernommen. Die Lochungen in den Profilen des Gabellenkers 8 und der Parallelschwinge 9 dienen zur Gewichtsreduzierung.

Eine Verlagerung des Lenkrades 3 und des oberen Lenksäulenteiles 2 in ihrer Höhe und/oder ihrer Ausrichtung in Fahrzeuglängsrichtung ist auch möglich durch die Bedienung jeweils eines einzelnen Stellzylinders 14, 15. Der jeweils andere Stellzylinder 14, 15 bleibt arretiert, so dass der jeweilige Gelenkpunkt 12, 13 für diesen Fall einen stationären Schwenkpunkt für die Schwenkhebelkinematik darstellt.

## Patentansprüche

1. Lenksäulenanordnung für ein Kraftfahrzeug, insbesondere ein Kettenfahrzeug, mit einem Lenkrad (3), dem Mittel (19) zur elektrischen oder elektronischen Übertragung von Lenkbewegungen des Lenkrades (3) auf eine Fahrzeugsteuerung zugeordnet sind, und wobei das Lenkrad (3) an einem oberen Lenksäulenteil (2) drehbeweglich angeordnet ist, der relativ zu einem fahrzeugfest angeordneten, unteren Lenksäulenteil (1) verstellbar gehalten ist, **dadurch gekennzeichnet, dass** Mittel zur kombinierten Höhen- und Längsverstellung zwischen dem unteren Lenksäulenteil (1) und dem oberen Lenksäulenteil (2) vorgesehen sind, die eine Schwenkhebelkinematik (5 bis 13) umfassen, mittels der der obere Lenksäulenteil (2) mit einem vom Lenkrad (3) abgewandten endseitigen Anlenkpunkt (7) in Fahrzeughochrichtung nach oben versetzt zu dem unteren Lenksäulenteil (1) an diesem angelenkt ist.

2. Lenksäulenanordnung nach Anspruch 1, **dadurch gekennzeichnet, dass** der Schwenkhebelkinematik wenigstens ein Blockiermittel zugeordnet ist, um den oberen Lenksäulenteil (2) in einer Funktionsstellung relativ zu dem unteren Lenksäulenteil (1) zu arretieren.

3. Lenksäulenanordnung nach wenigstens einem der vorhergehenden Ansprüche, **dadurch gekennzeichnet, dass** der Schwenkhebelkinematik wenigstens ein Antriebsmittel (14, 15) zugeordnet ist, das zur Kraftunterstützung oder Betätigung der Schwenkhebelkinematik vorgesehen ist.

4. Lenksäulenanordnung nach Anspruch 2 oder 3, **dadurch gekennzeichnet, dass** von einer Bedienperson bedienbare Betätigungsmittel für die Blockier- und/oder Antriebsmittel vorgesehen sind.

5. Lenksäulenanordnung nach einem der vorhergehenden Ansprüche, **dadurch gekennzeichnet, dass** den Mitteln zur Höhenverstellung und den Mitteln zur Längsverstellung jeweils eine separate Antriebseinheit (14, 15) zugeordnet ist, die durch jeweils ein separates Betätigungsmittel (17, 18) individuell ansteuerbar sind.

6. Lenksäulenanordnung nach Anspruch 2 oder 3, **dadurch gekennzeichnet, dass** als Antriebsmittel oder als Blockiermittel ein hydraulisch oder pneumatisch beaufschlagter Stellzylinder vorgesehen ist.

7. Lenksäulenanordnung nach Anspruch 1, **dadurch gekennzeichnet, dass** die Schwenkhebelkinematik eine Parallelogrammlenkereinheit aufweist.

8. Lenksäulenanordnung nach Anspruch 1, **dadurch gekennzeichnet, dass** die Schwenkhebelkinematik einen Stützhebel (5) aufweist, der an dem oberen Lenksäulenteil (2) einerseits und an dem unteren Lenksäulenteil (1) andererseits schwenkbeweglich angelenkt ist.

9. Lenksäulenanordnung nach Anspruch 4, **dadurch gekennzeichnet, dass** das Betätigungsmittel als Fußhebel (17, 18) gestaltet ist.

## Claims

1. Steering column arrangement for a vehicle, in particular a crawler vehicle with a steering wheel (3), to which means (19) for electric or electronic transmission of steering movements of the steering wheel (3) are provided for vehicle control, and wherein the steering wheel (3) is pivotally mounted on an upper steering column part (2), which is adjustably located relative to a lower steering column part (1) fixed on the vehicle, **characterised in that** the means for combined height and length adjustment are provided between the lower steering column part (1) and the upper steering column part (2), which enclose pivoted lever kinematics (5 to 13), by means of which the upper steering column part (2) with an end-side mounting point (7) turned away from the steering wheel (3) off-set upwards in the vehicle's height direction is articulated on the lower steering column part (1).

2. A steering column arrangement according to Claim 1, **characterised in that** at least one blocking means is provided for the pivoted lever kinematics, in order to lock the upper steering column part (2) in an operational position relative to the lower steering column part (1).

3. A steering column arrangement according to at least one of the preceding claims **characterised in that** a driving means (14, 15) is provided for pivoted lever kinematics that is intended for power assistance or for actuation of the pivoted lever kinematics.

4. A steering column arrangement according to Claim 2 or 3 **characterised in that** actuation means for the blocking and/or driving means that can be actuated by an operating person are provided.

5. A steering column arrangement according to one of the preceding Claims, **characterised in that** a separate driving unit (14, 15) is provided respectively for the means for height adjustment and for length adjustment, said driving units being individually controllable by separate actuation means (17, 18) respectively.

6. A steering column arrangement according to Claim 2 or 3 **characterised in that** a hydraulically or pneumatically actuated upright cylinder is provided as driving means or as blocking means.

7. A steering column arrangement according to Claim 1 **characterised in that** the pivoted lever kinematics features a parallelogram steering unit.

8. A steering column arrangement according to Claim 1, **characterised in that** the pivoted lever kinematics features a supporting lever (5), which is pivotally articulated on the upper steering column part (2) on the one hand and on the lower steering column part (1) on the other hand.

9. A steering column arrangement according to Claim 4 **characterised in that** the actuation means is shaped as a pedal (17, 18).

## Revendications

1. Agencement de colonne de direction pour un véhicule automobile, notamment un véhicule à chenilles, comprenant un volant (3) auquel ont été attribués des moyens (19) permettant de transmettre électriquement ou électroniquement, à une commande de véhicule, les mouvements de conduite imprimés au volant (3), ledit volant (3) doté d'une mobilité rotative étant agencé contre une partie supérieure (2) de la colonne de direction, partie qui est retenue de façon réglable relativement à une partie inférieure (1), agencée solidaire du véhicule, de la colonne de direction, **caractérisé en ce qu'**ont été prévus des moyens permettant le réglage combiné en hauteur et en longueur entre la partie inférieure (1) de la colonne de direction et la partie supérieure (2) de la colonne de direction, moyens qui comprennent une cinématique (5 à 13) à levier pivotant par laquelle la partie supérieure (2) de la colonne de direction est reliée articulée, de façon décalée vers le haut dans le sens de la hauteur du véhicule, à la partie inférieure (1) de la colonne de direction par un point d'articulation (7) terminal situé du côté opposé du volant (3).

2. Agencement de colonne de direction selon la revendication 1, **caractérisé en ce qu'**à la cinématique à levier pivotant a été attribué au moins un moyen de blocage permettant d'immobiliser la partie supérieure (2) de la colonne de direction sur une position fonctionnelle relativement à la partie inférieure (1) de la colonne de direction.

3. Agencement de colonne de direction selon au moins l'une quelconque des revendications précédentes, **caractérisé en ce qu'**à la cinématique à levier pivotant a été affecté au moins un moyen d'entraînement (14, 15) prévu pour assister par une force ou pour actionner la cinématique à levier pivotant.

4. Agencement de colonne de direction selon la revendication 2 ou 3, **caractérisé en ce qu'**ont été prévus des moyens, utilisables par un conducteur, permettant d'actionner les moyens de blocage et/ou d'entraînement,

5. Agencement de colonne de direction selon l'une quelconque des revendications précédentes, **caractérisé en ce que** des unités d'entraînement séparées (14, 15) ont été affectées respectivement aux moyens de réglage en hauteur et aux moyens de réglage en longueur, ces unités étant pilotables chacune par un moyen d'actionnement séparé (17, 18).

6. Agencement de colonne de direction selon la revendication 2 ou 3, **caractérisé en ce qu'**a été prévu, comme moyen d'entraînement ou moyen de blocage, un vérin de réglage sous pression hydraulique ou pneumatique.

7. Agencement de colonne de direction selon la revendication 1, **caractérisé en ce que** la cinématique à levier pivotant comprend une unité directrice à parallélogramme.

8. Agencement de colonne de direction selon la revendication 1, **caractérisé en ce que** la cinématique à levier pivotant comprend un levier de soutien (5) mobile car articulé d'un côté contre la partie supérieure (2) de la colonne de direction et de l'autre contre la partie inférieure (1) de la colonne de direction.

9. Agencement de colonne de direction selon la revendication 4, **caractérisé en ce que** le moyen d'actionnement est configuré en pédale (17, 18).
